# EUROPEAN PATENT APPLICATION

(11) **EP 3 719 305 A1**
(43) Date of publication of application: **07.10.2020**
(21) Application number: 19166613.0
(22) Date of filing: 01.04.2019
(51) Int. Cl.: F03D 7/04, F03D 17/00, F03D 80/50, F03D 80/80

(54) **WIND TURBINE HAVING A LEAKY FEEDER FOR HELICOPTER NAVIGATION**

(71) Applicant: Siemens Gamesa Renewable Energy A/S, 7330 Brande (DK)
(72) Inventor: Nagel, Eirik, 24939 Flensburg (DE); Nieuwenhuizen, John, 8700 Horsens (DK)
(74) Representative: Aspacher, Karl-Georg

(57) **Abstract**

A wind turbine (1) includes a tower (2), a nacelle (3) mounted to the tower (2), and a helicopter landing place (10) on the nacelle (3). The wind turbine (1) further comprises at least one leaky feeder (20) and a processing device (300) connected to the leaky feeder (20). The processing device (300) is configured to analyse a first electromagnetic signal (100) from the leaky feeder (20) and a reflected second electromagnetic signal (200), to determine a distance between the helicopter landing place (10) and a helicopter (12) based on the analysed first and second electromagnetic signals (100, 200), and to transmit information including the deter-mined distance between the helicopter landing place (10) and the helicopter (12) to the helicopter (12).

## Description

### Field of invention

The present invention relates to a wind turbine having a helicopter landing place. The present invention also relates to a method of determining a distance between a helicopter landing place on a nacelle of a wind turbine and a helicopter.

### Art Background

In the above defined technical field, if a helicopter is trying to land on an offshore wind turbine landing platform, the pilot doesn't know the exact height of the helicopter above the platform. Also orientation on other object is not possible, because there is only water (sometimes up to the horizon) around the turbine. So there is less orientation and low visibility due to dust, fog or rain.

Up to now, there is no solution for this problem.

### Summary of the Invention

It is the object of the present invention to provide a wind turbine and a method of determining a distance between a helicopter landing place on a nacelle of a wind turbine and a helicopter, by which a landing operation of the helicopter can be made safer.

This object is achieved by the subject matters according to the independent claims. Advantageous further developments of the present invention are described by the dependent claims.

According to a first aspect of the present invention, a wind turbine includes a tower, a nacelle mounted to the tower, and a helicopter landing place on the nacelle. The wind turbine further comprises at least one leaky feeder, at least one electromagnetic transmitter configured to transmit a first electromagnetic signal towards a helicopter, at least one electromagnetic receiver configured to receive a second electromagnetic signal, the second electromagnetic signal being reflected from the helicopter when the first electromagnetic signal hits the helicopter, wherein the at least one electromagnetic transmitter is connected to the least one leaky feeder to transmit the first electromagnetic signal along the least one leaky feeder towards a helicopter and/or the at least one electromagnetic receiver is connected to the least one leaky feeder to receive from the at least one leaky feeder the second electromagnetic signal; and a processing device connected to the electromagnetic transmitter and the electromagnetic receiver, the processing device being configured to analyse the first electromagnetic signal and the second electromagnetic signal, to determine a distance between the helicopter landing place and the helicopter (which can also be a drone) based on the analysed first and second electromagnetic signals, and to transmit information including the determined distance between the helicopter landing place and the helicopter to the helicopter.

A cheap leaky feeder cable can be used to measure the distance between the helicopter landing place such as a platform and the helicopter and to report this information to the pilot. Also direction and angle measurement of incoming helicopter can be measured or calculated by such a leaky feeder. The leaky feeder can be fed by a radar signal. Due to backscattering, it is possible to calculate the helicopter's position, speed, etc.

Advantageously, the present invention provides a simple system which can use a cheap leaky coaxial cable and which is robust to work even in harsh environments. If a radar signal is used for the leaky feeder, the radar is able to penetrate through rain, dust and fog. As a result, the present invention offers more safety in particular for offshore helicopter service missions.

Preferably, the helicopter landing place is provided with a visible indicator, wherein the distance between the helicopter landing place and the helicopter is a distance between the indicator and the helicopter. Thereby, the safety is further improved. In particular, the visible indicator can visually provide information to the pilot in real time about the position in three dimensions as well as about the helicopter's speed. Moreover, the present invention can improve the safety of the landing operation in poor visibility situations and in emergency situations. The distance between the indicator and the helicopter can either be inclined or in parallel with the visible indicator.

Preferably, the transmitted information further includes at least one of the following: a helicopter speed relative to the helicopter landing place; an angle or a direction of a helicopter's flight trajectory relative to the helicopter landing place at a current position of the helicopter; and a remaining time of a landing operation of the helicopter to the helicopter landing place. By this further information, the safety is further improved.

Preferably, the processing device is further configured to determine a wind speed based on the analysed first and second electromagnetic signals and to transmit information including the determined wind speed to the helicopter. Thus, the wind speed is determined by the same leaky feeder so that the costs of the system are reduced.

Preferably, the at least one leaky feeder is arranged as an arc or a loop extending in a plane of the helicopter landing place.

In an embodiment, the leaky feeder can be used to transmit the first electromagnetic signal and to receive the second electromagnetic signal, for example in a double ring system. In an alternative embodiment, a single point antenna can be used, for example in the middle of a ring-shaped leaky feeder. One of the single point antenna and the leaky feeder can be used to transmit the first electromagnetic signal, while the other one of the single point antenna and the leaky feeder can be used to receive the second electromagnetic signal.

According to a second aspect of the present invention, a method of determining a distance between a helicopter landing place on a nacelle of a wind turbine and a helicopter is provided. The wind turbine includes a tower, the nacelle mounted to the tower, the helicopter landing place on the nacelle, and at least one leaky feeder. At least one electromagnetic transmitter is connected to the least one leaky feeder and/or at least one electromagnetic receiver is connected to the least one leaky feeder. The method comprises steps of: transmitting a first electromagnetic signal towards a helicopter by the at least one electromagnetic transmitter, receiving by the at least one electromagnetic receiver a second electromagnetic signal, the second electromagnetic signal being reflected from the helicopter when the first electromagnetic signal hits the helicopter, wherein the at least one electromagnetic transmitter is connected to the least one leaky feeder to transmit the first electromagnetic signal along the least one leaky feeder towards a helicopter and/or the at least one electromagnetic receiver is connected to the least one leaky feeder to receive from the at least one leaky feeder the second electromagnetic signal, analysing the first and second electromagnetic signals, determining a distance between the helicopter landing place and the helicopter based on the analysed first and second electromagnetic signals, and transmitting information including the determined distance between the helicopter landing place and the helicopter to the helicopter.

Preferably, the method further comprising a step of: transmitting further information to the helicopter, the further information include at least one of the following: a helicopter speed relative to the helicopter landing place; an angle or a direction of a helicopter's flight trajectory relative to the helicopter landing place at a current position of the helicopter; and a remaining time of a landing operation of the helicopter to the helicopter landing place.

Preferably, the method further comprising a step of: determining a wind speed based on the analysed first and second electromagnetic signals and to transmit information including the determined wind speed to the helicopter.

In another embodiment, a transmission of a radar transmitter, which is placed at the helicopter, can be received by the leaky feeder as the second electromagnetic signal to determine the distance between the helicopter landing place and the helicopter.

The method provides the same advantages like the wind turbine of the first aspect. Generally, the present invention provides a support for the pilot for manual or automatic positioning and landing of the helicopter on the helicopter landing place.

### Brief Description of the Drawings

The aspects defined above and further aspects of the present invention are apparent from the examples of embodiment to be described hereinafter and are explained with reference to the examples of embodiment. The invention will be described in more detail hereinafter with reference to examples of embodiment but to which the invention is not limited.
- Fig. 1: shows a wind turbine according to an embodiment of the present invention.
- Fig. 2: shows a schematic view of a leaky feeder according to an embodiment of the present invention.
- Fig. 3: shows a plan view of a nacelle of a wind turbine according to an embodiment of the present invention.

### Detailed Description

The illustrations in the drawings are schematically. It is noted that in different figures, similar or identical elements are provided with the same reference signs.

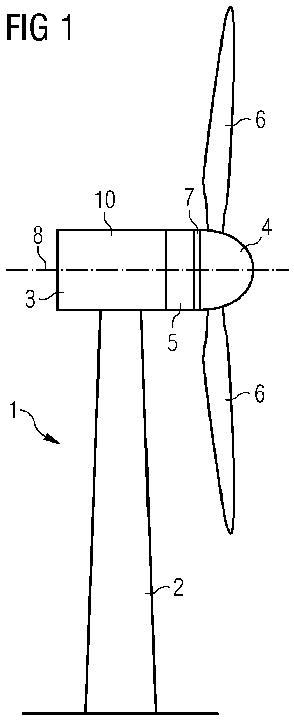

**Fig. 1** shows a wind turbine 1. The wind turbine 1 is configured to be disposed in or above a sea floor (offshore). The wind turbine 1 can also be disposed above the sea floor in a floating manner. The wind turbine 1 comprises a nacelle 3 and a tower 2. The nacelle 3 is mounted at the top of the tower 2. The nacelle 3 is mounted rotatable with regard to the tower 2 by means of a yaw bearing. The axis of rotation of the nacelle 3 with regard to the tower 2 is referred to as the yaw axis.

The wind turbine 1 also comprises a hub 4 with three rotor blades 6 (of which two rotor blades 6 are depicted in Fig. 1). The hub 4 is mounted rotatable with regard to the nacelle 3 by means of a main bearing 7. The hub 4 is mounted rotatable about a rotor axis of rotation 8.

The wind turbine 1 furthermore comprises a generator 5. The generator 5 in turn comprises a rotor connecting the generator 5 with the hub 4. The hub 4 is connected directly to the generator 5, thus the wind turbine 1 is referred to as a gearless, direct-driven wind turbine. Such a generator 5 is referred as direct drive generator 5. As an alternative, the hub 4 may also be connected to the generator 5 via a gear box. This type of wind turbine 1 is referred to as a geared wind turbine. The present invention is suitable for both types of wind turbines 1. The generator 5 is accommodated within the nacelle 3. The generator 5 is arranged and prepared for converting the rotational energy from the hub 4 into electrical energy in the shape of an AC power. One end of the generator 5 at the hub side is referred as drive end, and the other end of the generator 5 at the nacelle side is referred as non-drive end.

The wind turbine 1 further comprises at least one leaky feeder 20.

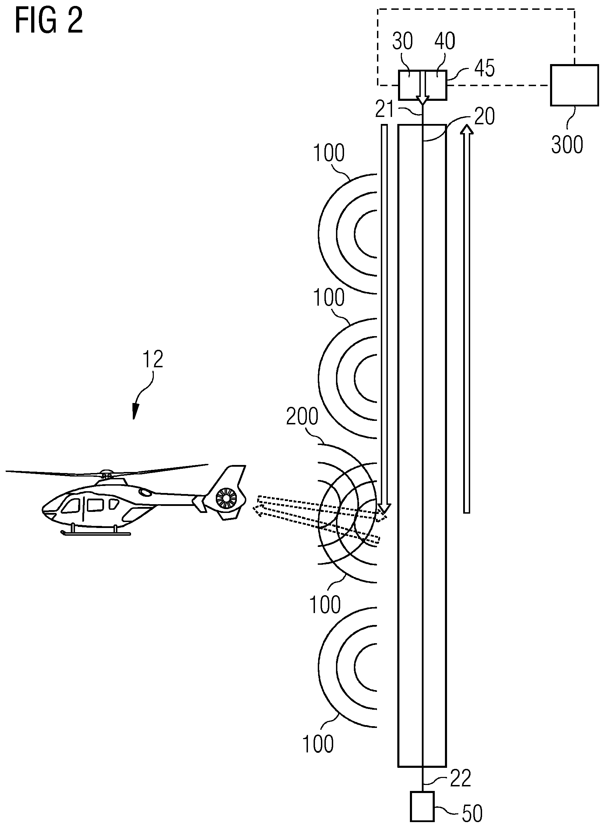

**Fig. 2** shows such a leaky feeder 20. An electromagnetic transmitter 30 is connected to the least one leaky feeder 20 and configured to transmit a first electromagnetic signal 100 along the least one leaky feeder 20 towards a helicopter 12. In the context of the present invention, the term "helicopter" also includes a drone. At least one electromagnetic receiver 40 is connected to the least one leaky feeder 20 and configured to receive from the at least one leaky feeder 20 a second electromagnetic signal 200, the second electromagnetic signal 200 being reflected from the helicopter 12 when the first electromagnetic signal 100 hits the helicopter 12.

In some cases, if a single leaky feeder 20 is used, the measured distance can have a uncertainty if the electromagnetic transmitter 30 and the electromagnetic receiver 40 are at the same end 21 or 22. Therefore, it is preferred if the electromagnetic transmitter 30 is at one end of the leaky feeder 20 and the electromagnetic receiver 40 is on the other end of the leaky feeder 20.

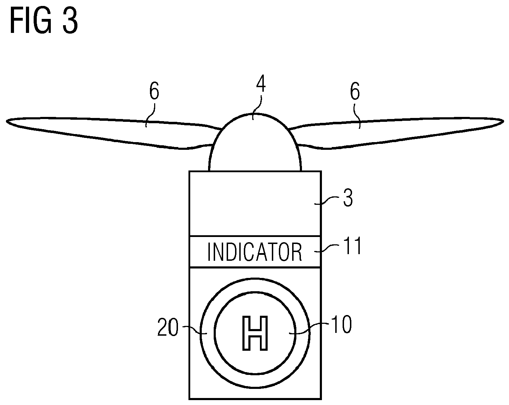

The wind turbine 1 further comprises a processing device 300. The processing device 300 is connected to the electromagnetic transmitter 30 and the electromagnetic receiver 40. The processing device 300 is configured to analyse the first electromagnetic signal 100 and the second electromagnetic signal 200, to determine a distance between a helicopter landing place 10 (see Fig. 3) and the helicopter 12 based on the analysed first and second electromagnetic signals 100, 200, and to transmit information including the determined distance between the helicopter landing place 10 and the helicopter 12 to the helicopter 12.

The leaky feeder 20 can be an elongated component which leaks an electromagnetic wave 100 which is transmitted along the component. The leaky feeder 20 may be constituted by a leaky coaxial cable or a leaky waveguide or a leaky stripline. The leaky feeder 20 is connected to an electromagnetic transmitter 30 in order to transmit a first electromagnetic signal 100 along the leaky feeder 20 towards the helicopter 12. The leaky feeder 20 comprises a plurality of slots to allow the first electromagnetic signal 100 to leak out of the leaky feeder 20 along its entire length towards the helicopter 12.

The slots may be, according to possible embodiments, regularly distributed along the length of the leaky feeder 20. According to other possible embodiments of the present invention, the leaky feeder 20 is a normal coaxial cable with low optical coverage of the outside conductor (mesh or slots/apertures) which also leaks electromagnetic waves.

The leaky feeder 20 may be provided with a heating system (not shown) in case severe over icing conditions are possible. Heating may be provided by air flowing between in and outside conductor or by electrical current which runs in inner or outer conductor of the leaky feeder 20.

The first electromagnetic signal 100 may be, according to possible embodiments, a radar signal or an ultrasonic signal. In cases where the first electromagnetic signal 100 is a radar signal or an ultrasonic signal, the leaky feeder 20 is preferably configured as a coaxial leaky cable.

According to other embodiments, particularly where the first electromagnetic signal 100 is of higher frequency, the leaky feeder 20 is preferably configured as a leaky waveguide.

In general, according to the different embodiments of the present invention, the first electromagnetic signal 100 may be of any frequency, provided that it can be transmitted to the helicopter 12 and be reflected by the helicopter 12. When the first electromagnetic signal 100 impinges the helicopter 12, a reflected second electromagnetic signal 200 is transmitted towards the leaky feeder 20.

The plurality of slots of the leaky feeder 20 allow the reflected, second electromagnetic signal 200 to leak into the leaky feeder 20 towards the electromagnetic receiver 40.

The processing device 300 can analyse the first electromagnetic signal 100 and the second electromagnetic signal 200 for determining the position, speed, direction and size of the helicopter 12. According to the known (radar) principles of the amplitude, phase, Doppler effect and of ToF (Time of Flight), the processing device 300 is able to compare the first electromagnetic signal 100 and the second electromagnetic signal 200 caused by the moving helicopter 12 and consequently to determine the speed and/or position and/or direction, etc. of the helicopter 12.

The embodiment in Fig. 2 comprises one leaky feeder 20. The leaky feeder 20 extends between a first end 21 and a second end 22. The first end 21 is connected to an electromagnetic transceiver 45 comprising one electromagnetic transmitter 30 and one electromagnetic receiver 40. The second end 22 is connected to one final resistance 50.

According to other embodiments of the present invention, the electromagnetic transmitter 30 and the electromagnetic receiver 40 may be both connected to the first end 21 or to the second end 22 via a signal splitter or y-adapter.

According to other embodiments of the present invention, the electromagnetic transmitter 30 is connected to the first end 21 and the electromagnetic receiver 40 is connected to the second end 22.

The leaky feeder 20 may not be connected directly to the electromagnetic transmitter 30 and to the electromagnetic receiver 40, e.g. a non-leaky feeder cable (i.e. a normal coaxial cable) may be interposed between the leaky feeder 20 and the electromagnetic transmitter 30 and/or the electromagnetic receiver 40. A normal coaxial cable may be connected directly to the electromagnetic transmitter 30 and to the electromagnetic receiver 40 or it may be used for interconnection.

According to other embodiments, a plurality of leaky feeders 20 can be provided. For example, a first leaky feeder can be a transmitting leaky feeder and a second leaky feeder can be a receiving leaky feeder.

In another embodiment, a transmission of a radar transmitter, which is placed at the helicopter 12, can be received by the leaky feeder 20 as the second electromagnetic signal 200 to determine the distance between the helicopter landing place 10 and the helicopter 12.

**Fig. 3** shows a plan view of the nacelle 3 of the wind turbine 1 according to an embodiment of the present invention. The helicopter landing place 10 is arranged on the nacelle 3. The helicopter landing place 10 can be a platform. The helicopter landing place 10 is provided with a visible indicator 11, wherein the distance between the helicopter landing place 10 and the helicopter 12 can be a distance between the indicator 11 and the helicopter 12.

The leaky feeder 20 can be arranged in or at the visible indicator 11. The leaky feeder 20 can have a rectilinear extension. Alternatively, the leaky feeder 20 can be arranged as an arc or a loop extending in a plane of the helicopter landing place 10. The plane of the helicopter landing place 10 is usually horizontally orientated.

The leaky feeder 20 can be used to transmit the first electromagnetic signal 100 and to receive the second electromagnetic signal 200, for example in a double ring system. In an alternative embodiment, a single point antenna (not shown) can be used, for example in the middle of the ring-shaped leaky feeder 20. One of the single point antenna and the leaky feeder 20 can be used to transmit the first electromagnetic signal 100, while the other one of the single point antenna and the leaky feeder 20 can be used to receive the second electromagnetic signal 200.

The transmitted information can further include at least one of the following: a helicopter speed relative to the helicopter landing place 10; an angle or a direction of a helicopter's flight trajectory relative to the helicopter landing place 10 at a current position of the helicopter 12; and a remaining time of a landing operation of the helicopter 12 to the helicopter landing place 10.

The processing device 300 can further be configured to determine a wind speed based on the analysed first and second electromagnetic signals 100, 200 and to transmit information including the determined wind speed to the helicopter 12. This can be made if the second electromagnetic signal 200 includes a component which is reflected from the sea level. The wave shape of the sea level changes in dependency of the wind speed so that the analysed wave shape based on that component of the second electromagnetic signal 200 may provide information about the wind speed.

It should be noted that the term "comprising" does not exclude other elements or steps and "a" or "an" does not exclude a plurality. Also elements described in association with different embodiments may be combined. It should also be noted that reference signs in the claims should not be construed as limiting the scope of the claims.

## Claims

1. A wind turbine (1) including a tower (2), a nacelle (3) mounted to the tower (2), and a helicopter landing place (10) on the nacelle (3), wherein the wind turbine (1) further comprising:
- at least one leaky feeder (20),
- at least one electromagnetic transmitter (30) configured to transmit a first electromagnetic signal (100) towards a helicopter (12),
- at least one electromagnetic receiver (40) configured to receive a second electromagnetic signal (200), the second electromagnetic signal (200) being reflected from the helicopter (12) when the first electromagnetic signal (100) hits the helicopter (12), wherein
the at least one electromagnetic transmitter (30) is connected to the least one leaky feeder (20) to transmit the first electromagnetic signal (100) along the least one leaky feeder (20) towards a helicopter (12) and/or the at least one electromagnetic receiver (40) is connected to the least one leaky feeder (20) to receive from the at least one leaky feeder (20) the second electromagnetic signal (200); and
- a processing device (300) connected to the electromagnetic transmitter (30) and the electromagnetic receiver (40), the processing device (300) being configured to analyse the first electromagnetic signal (100) and the second electromagnetic signal (200), to determine a distance between the helicopter landing place (10) and the helicopter (12) based on the analysed first and second electromagnetic signals (100, 200), and to transmit information including the determined distance between the helicopter landing place (10) and the helicopter (12) to the helicopter (12).

2. The wind turbine (1) according to the preceding claim, wherein
the at least one leaky feeder (20) comprises a leaky coaxial cable.

3. The wind turbine (1) according to any one of the preceding claims, wherein
the helicopter landing place (10)is provided with a visible indicator (11), wherein the distance between the helicopter landing place (10) and the helicopter (12) is a distance between the indicator (11) and the helicopter (12).

4. The wind turbine (1) according to any one of the preceding claims, wherein
the transmitted information further include at least one of the following: a helicopter speed relative to the helicopter landing place (10); an angle or a direction of a helicopter's flight trajectory relative to the helicopter landing place (10) at a current position of the helicopter (12); and a remaining time of a landing operation of the helicopter (12) to the helicopter landing place (10).

5. The wind turbine (1) according to any one of the preceding claims, wherein
the processing device (300) is further configured to determine a wind speed based on the analysed first and second electromagnetic signals (100, 200) and to transmit information including the determined wind speed to the helicopter (12) .

6. The wind turbine (1) according to any one of the previous claims, wherein the at least one leaky feeder (20) is arranged as an arc or a loop extending in a plane of the helicopter landing place (10).

7. A method of determining a distance between a helicopter landing place (10) on a nacelle (3) of a wind turbine (1) and a helicopter (12), wherein the wind turbine (1) includes a tower (2), the nacelle (3) mounted to the tower (2), the helicopter landing place (10) on the nacelle (3), and at least one leaky feeder (20), wherein at least one electromagnetic transmitter (30) is connected to the least one leaky feeder (20) and/or at least one electromagnetic receiver (40) is connected to the least one leaky feeder (20), the method comprises steps of:
- transmitting a first electromagnetic signal (100) towards the helicopter (12) by the at least one electromagnetic transmitter (30),
- receiving a second electromagnetic signal (200) by the at least one electromagnetic receiver (40), the second electromagnetic signal (200) being reflected from the helicopter (12) when the first electromagnetic signal (100) hits the helicopter (12), wherein
the at least one electromagnetic transmitter (30) is connected to the least one leaky feeder (20) to transmit the first electromagnetic signal (100) along the least one leaky feeder (20) towards a helicopter (12) and/or the at least one electromagnetic receiver (40) is connected to the least one leaky feeder (20) to receive from the at least one leaky feeder (20) the second electromagnetic signal (200);
- analysing the first and second electromagnetic signals (100, 200),
- determining a distance between the helicopter landing place (10) and the helicopter (12) based on the analysed first and second electromagnetic signals (100, 200), and
- transmitting information including the determined distance between the helicopter landing place (10) and the helicopter (12) to the helicopter (12).

8. The method according to the preceding claim, further comprising a step of:
transmitting further information to the helicopter (12), the further information includes at least one of the following: a helicopter speed relative to the helicopter landing place (10); an angle or a direction of a helicopter's flight trajectory relative to the helicopter landing place (10) at a current position of the helicopter (12); and a remaining time of a landing operation of the helicopter (12) to the helicopter landing place (10).

9. The method according to any one of the preceding claims 7 and 8, further comprising a step of:
determining a wind speed based on the analysed first and second electromagnetic signals (100, 200) and to transmit information including the determined wind speed to the helicopter (12).
